# EUROPÄISCHE PATENTSCHRIFT

(11) **EP 0 697 368 B1**
(45) Veröffentlichungstag und Bekanntmachung des Hinweises auf die Patenterteilung: **24.03.1999**
(21) Anmeldenummer: 94114474.3
(22) Anmeldetag: 14.09.1994
(51) Int. Cl.: B66F 9/14

(54) **Aufnahmevorrichtung für Paletten**
Pick-up attachment for pallets
Dispositif de soulèvement pour palettes

(30) Priorität: 20.08.1994 DE 9413476 U
(43) Veröffentlichungstag der Anmeldung: 21.02.1996
(73) Patentinhaber: "AFB" Anlagen- und Filterbau GmbH & Co. KG, D-35708 Haiger-Sechshelden (DE)
(72) Erfinder: Langer, Heinz, D-57223 Kreuztal (DE)
(74) Vertreter: Grosse, Dietrich, Dipl.-Ing.

(56) Entgegenhaltungen:
- DE-A- 1 810 956
- FR-A- 2 214 643
- GB-A- 1 346 027

## Beschreibung

Die Erfindung betrifft eine teleskopierbare Aufnahmevorrichtung zur Handhabung von Packungen und Verpackungseinheiten, insbesondere von Paletten, mit einem Drehtisch, der mit Führungsschienen ausgestattet ist, in denen die unteren Schenkel von U-förmig ausgeförmten Kragarmen geführt sind, deren oberen Schenkein teleskopartig ausschiebbare Tragarme zugeordnet sind.

Zum Einlagern von Paletten werden verbreitet Hochregallager verwendet, die durch Regalförderzeuge bedient werden, die mit Regalbedienungsgeräten ausgestattet sind. Ein solches Regalbedienungsgerät gestattet es, von Zu- und Abführbahnen Verpackungseinheiten bzw. Paletten zu übernehmen bzw. an diese abzugeben, und das Regalbedienungsgerät ist auch in der Lage, Paletten an vorgegebenen Stellen in Hochregallager abzugeben bzw. von diesen aufzunehmen. Im allgemeinen werden hierbei Paletten benutzt, deren Grundfläche durch Klötze auf Distanz gehaltene Bodenbretter aufweist, zwischen denen deren Grundfläche von unten her frei zugängig ist und damit das Ansetzen von tragenden Gabein mühelos erlaubt. Es sind jedoch auch andere Paletten in Gebrauch, bei denen die Klötze zur Bildung eines nach unten abgeschlossenen Raumes durch Bodenbretter zusätzlich miteinander verbunden sind, oder nach unten offene Paletten werden um 90° um ihre Hochachse verdreht zugeführt, so daß aufnehmende Gabeln in den zwischen Bodenbrettern und Deckbrettern geführten Zwischenraum einzufahren sind. Oft besteht auch der Wunsch, Paletten quergestellt zu transportieren und/oder einzulagern. Ein Überlaufen der Mittelstellung zur Bedienung rechts- und linksseitig des Regalganges vorgesehener Regalfächer ist hierbei jedoch mit üblichen, teleskopartig aufgebauten Regalbedienungsgeräten nicht möglich.

Von der Inhaberin wurde anläßlich der Hannover-Messe 1994 eine der Gattung entsprechende Anordnung gezeigt, die es gestattet, mit Tragarmen-Deckbretter von Paletten auch bei der Anwesenheit von Bodenbrettern zu untergreifen, indem die Tragarme in den zwischen diesen gebildeten Zwischenraum eingefahren werden. Anschließend können die Tragarme zurückgefahren werden, wobei evtl. vorhandene Bodenbretter in den zwischen den beiden horizontalen Schenkeln der Kragarme gebildeteten Raum eintreten. Es hat sich jedoch gezeigt, daß mit einer solchen Anordnung nur sehr mäßige Auflagegewichte beherrscht werden und direkt neben der Auflagevorrichtung angeordnete Abstellplätze bedient werden können.

Die Erfindung geht von der Aufgabe aus, den Arbeitsbereich solcher Aufnahmevorrichtungen für Verpackungseinheiten, insbesondere Paletten, zu erweitern, um bei hintereinandergelegenen Abstellplätzen auch die zweite Abstellreihe bedienen zu können, ohne die Abmessungen der Aufnahmevorrichtung in ihrer Ruhe- bzw. auch Fahrstellung zu erhöhen.

Gelöst wird diese Aufgabe mit den Merkmalen des Patentanspruchs 1. Der Aufbau eines eine solche Aufnahmevorrichtung aufweisenden Regalbedienungsgerätes läßt nicht nur ein beliebiges Drehen und Schwenken aufgenommener Paletten oder Packungen ebenso zu wie das Aufnahmen von oder Abgeben auch an solche Förderwege, welche den Regalfächern nicht parallel angeordnet sind, er erlaubt auch, Regale mit zwei jeweils hintereinander angeordneten Stellplätzen zu bedienen und damit Regalstapelanlagen kompakter und preiswerter herzustellen, als dies bisher möglich ist.

Die Merkmale der Unteransprüche zeigen weitergehende zweckmäßige, vorteilhafte und/oder erfinderische Maßnahmen, welche das Aufnehmen hoher Lasten sowie das angestrebte Ausfahren auf extrem lange Lade- bzw. Entladewege gestatten.

Im einzelnen sind die Merkmale der Erfindung anhand der folgenden Beschreibung von Ausführungsbeispielen in Verbindung mit diese darstellenden Zeichnungen erläutert. Es zeigen hierbei
- Figur 1: eine Seitenansicht eines einfachen, vorbekannten Regalbedienungsgerätes zur Handhabung von Paletten in ausgefahrenem Zustande,
- Figur 2: eine Aufsicht auf die Anordnung nach Fig. 1 mit aufgegebener Last in eingefahrenem Zustande,
- Figur 3: die schematische Seitenansicht einer gemäß der Erfindung eine extreme Ausfahrweite aufgenommener Paletten gestattenden Anordnung,
- Figur 4: eine Aufsicht auf die Anordnung der Fig. 3,
- Figur 5: in einer schematischen Seitenansicht eine zur Übernahme hoher Lasten weitergebildete Anordnung zur Handhabung von Paletten, und
- Figur 6: eine schematische Aufsicht auf die Anordnung nach Fig. 5.

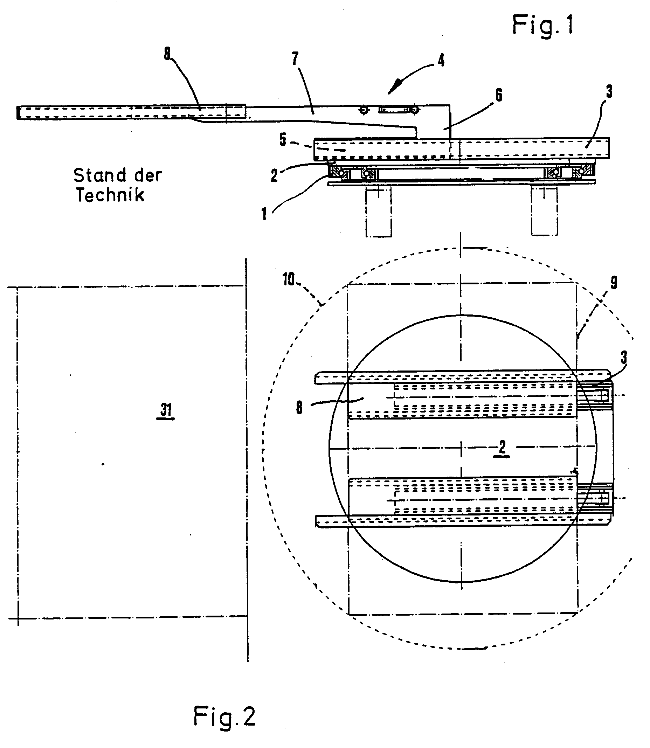

In der Fig. 1 ist eine der Öffentlichkeit bereits vorgestellte Anordnung zur Handhabung von Verpackungseinheiten, insbesondere Paletten, gezeigt, die bspw. als Regalbedienungsgerät in einem Hochregallager einsetzbar ist. Auf einem Drehkranz 1 ist ein Drehtisch 2 um seine zentrale Hochachse drehbar gelagert. Der Drehtisch 2 ist mit einem seiner Durchmesser parallelen Führungsschienen 3 ausgestattet, in denen der untere Schenkel 5 eines U-förmig ausgebildeten Kragarmes 4 horizontal verschiebbar gehalten ist. Über ein kurzes und, nach Möglichkeit, schmales Joch 6 schließt sich an den unteren Schenkel 5 ein weit ausladender oberer Schenkel 7 an, der mit Führungsflächen zur teleskopartigen Führung des eigentlichen, Lasten wie Paletten aufnehmenden Tragarmes 8 versehen ist. Die Anordnung ist in nach links ausgefahrener Stellung dargestellt, in der der untere Schenkel 5 des Kragarmes 4 praktisch bis zum Anschlag nach links ausgefahren ist, und ebenso der Tragarm 8 auf dem oberen Schenkel 5 des Kragarmes 4 extrem nach links vorgeschoben ist. Beim teleskopartigen Vorschieben des Kragarmes 4 sowie des Tragarmes 8 können Paletten unterfahren werden, wobei ein Unterfahren von deren Deckbrettern bzw. Zwischenbrettern auch möglich ist, wenn die Palette hierbei störende Bodenbretter aufweist und der Tragarm in den zwischen Deck- bzw. Zwischenbrettern und Bodenbrettern gebildeten Zwischenraum einzufahren ist.

Nach dem Einfahren kann durch Anheben der Anordnung die Last übernommen werden und durch Rückfahren sowohl des Kragarmes 4 als auch dessen Tragarm 8 in eine Stellung gebracht werden, in der eine aufgenommene Palette 9 gemäß Fig. 2 vor dem Regalfach 31, dem sie entnommen wurde, etwa symmetrisch über dem Drehtisch 2 steht und das am weitesten rechts stehende Bodenbrett der Palette direkt gegen die innere Flanke des Joches 6 geführt ist. Nunmehr kann die aufgenommene Palette 9 in die erforderliche Richtung gedreht werden, wobei der gestrichelt dargestellte Umkreis 10 in Anspruch genommen wird.

Eine derartige Anordnung hat sich bereits bei Paletten geringerer Abmessungen und mit begrenzten Gewichten bewährt. Darüber hinaus besteht aber gemäß der Beschreibung vorangestellten Aufgabe der Wunsch, nicht nur größere und auch größte und damit auch schwerste Paletten handhaben zu können, wobei zu berücksichtigen ist, daß die angegebene maximale Belastung vom Belader der Palette oft wesentlich überschritten wird; es besteht auch der Wunsch nach größeren Ausfahrweiten. Mit entsprechend großen Ausfahrweiten ist es bspw. möglich, Hochregallager so zu gestalten, daß deren einzelne Fächer jeweils zwei hintereinander abgestellte Paletten, gegebenenfalls quer eingelagert, aufzunehmen vermögen. Damit wird wesentlich an Grundfläche und somit an Herstellungsaufwand gespart, da nunmehr, von einer Regalbedienungsgasse ausgehend, je Fachquerschnitt vier Paletten unterbringbar sind, nämlich jeweils zwei hintereinander rechts der Regalgasse als auch links der Regalgasse. Hierbei ist es jedoch erforderlich, daß der Teleskopauszug des Bedienungsgerätes um eine Palettentiefe zuzüglich einem geringen Sicherheitsabstand größer anzusetzen ist als bisher, wobei praktisch aber alle übrigen bisherigen Forderungen bezüglich der schnellen Lade- bzw. Entladezeit und der geringen elastischen Durchbiegung der Teleskopanordnung aufrechterhalten bleiben.

Durch den gebildeten langen Hebelarm, von dem die Last aufzunehmen ist, ergeben sich erhebliche Momente, die vom Joche 6 des Kragarmes aufzunehmen sind. Andererseits verbietet es sich, die Breite dieses Joches zu erhöhen, da die innere Flanke des Joches das optimale Einfahren von quer stehende Bodenbretter aufweisenden Paletten begrenzt.

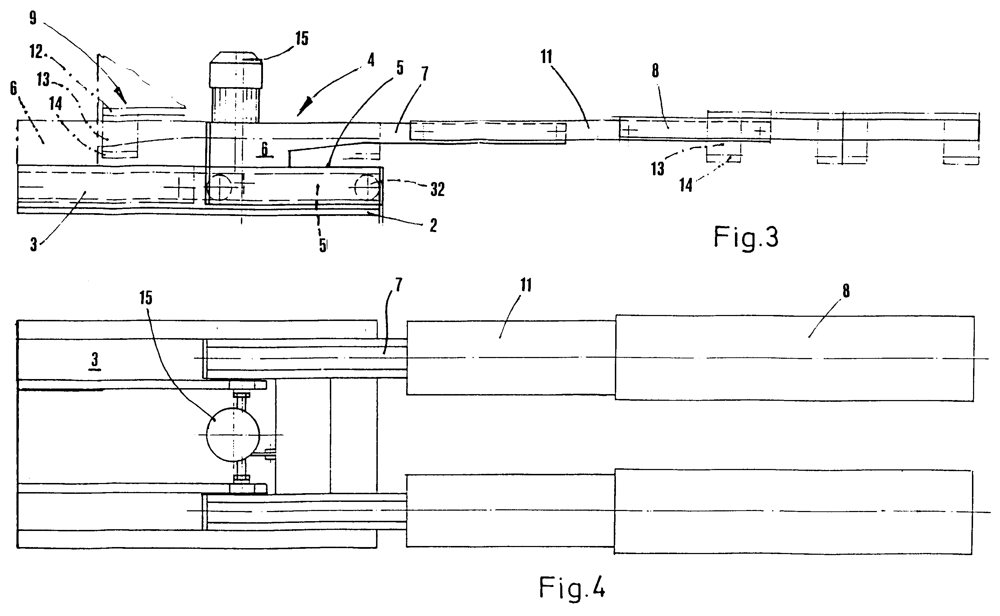

Es sei zunächst eine einfache, der Erfindung entsprechende Anordnung beschrieben, die schematisch in der Seitenansicht in Fig. 3 und in der Aufsicht in Fig. 4 dargestellt ist. Zur Erleichterung der Übersicht sind die bereits bekannten Referenznummern übernommen.

Auch hier enthält der Drehtisch 2 Führungsschienen 3, in denen die unteren Schenkel 5 von Kragarmen 4 horizontal geführt sind. Vom zur Übernahmefähigkeit hoher Momente verbreiterten Joch 6 wird der obere Schenkel 7 der Kragarme 4 getragen, der seinerseits teleskopartig verschiebbar geführt eine Ausfahrschiene 11 aufweist, die ihrerseits den Tragarm 8 führt. In der Fig. 3 sind Kragarme 4, Ausfahrschienen 11 und Tragarme 8 in ausgefahrenem Zustande dargestellt. Strichpunktiert jedoch ist der Kragarm 4 auch in der zurückgezogenen Stellung gezeigt, und ebenso strichpunktiert ist abgebrochen eine aufgeladene Palette 9 dargestellt, die nach unten durch Deckbrett 12, Klotz 13 und Bodenbrett 14 abgeschlossen ist, welches letztere sich praktisch gegen die innere Flanke des Joches 6 legt. Weiterhin dargestellt ist ein Elektromotor 15, der das teleskopische Vorschieben von Kragarm 4, Ausfahrschiene 11 und Tragarm 8 bewirkt.

Nachteilig macht es sich hierbei noch bemerkbar, daß der in ausgefahrenem Zustand überaus lange Lastarm zwar eine Palette 9 in einem Regalfach eines Hochregallagers so tief abzustellen vermag, daß, bspw. mit einem Sicherheitsabstand von 48 mm, vor dieser Palette in einem späteren Arbeitsvorgang noch eine zweite Palette abstellbar ist. Nachteilig jedoch zeigen sich hierbei die durch den außerordentlich langen tragenden Hebelarm gegebenen hohen Momente, mit denen der Kragarm 4 beansprucht wird, und der zu der relativ breiten Ausführung seines Joches 6 führt. Dieses breite Joch grenzt, wie schon vermerkt, die Möglichkeiten des Einfahrens von Lasten ein und erhöht damit unvorteilhaft die Breite der zwischen den Regalfronten eines Hochregallagers vorgesehenen Bedienungsgassen für das Regalförderzeug.

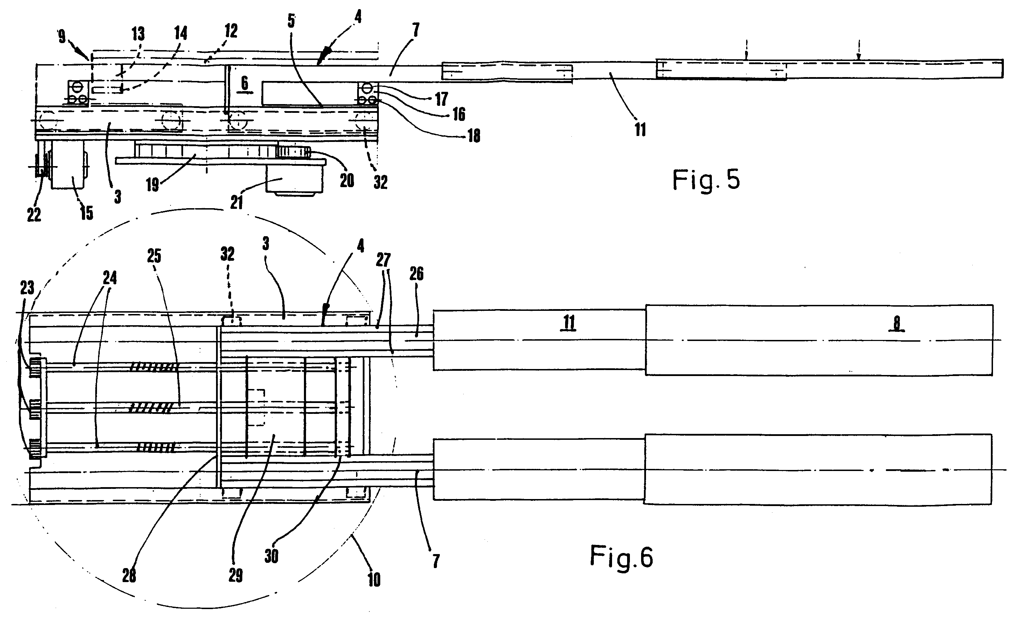

In Fig. 5 in der Seitenansicht und Fig. 6 in der Aufsicht ist eine weitere Anordnung gezeigt, bei der das Joch 6 des Kragarmes 4 auf eine wünschenswert geringe Breite zurückgeführt werden kann. Auch hier wieder sind in der Beschreibung für bereits bekannte Teile deren bereits eingeführte Referenznummern verwendet.

Fig. 5 zeigt in der Seitenansicht eine Anordnung, bei der der Tragarm 8 extrem weit zur Bedienung des hinteren von zwei hintereinanderliegenden Regalplätzen ausgefahren ist. Trotz des hierbei auftretenden hohen Momentes ist das Joch 6 des Kragarmes 4 vorteilhaft schmal ausgeführt. Das hohe, das Joch 6 belastende Moment, das bei voller Belastung des extrem weit ausgefahrenen Tragarmes 8 sich ergibt, wird hier durch eine direkte Abstützung des oberen Schenkels 7 des Kragarmes 4 gegen dessen unteren Schenkel 5 abgefangen. Die oberen Schenkel 7 sind jeweils von einer in einem Wagen 16 vorgesehenen Stützrolle 17 abgestützt, wobei der Wagen sich seinerseits mit Laufrollen 18 gegen den unteren Schenkel 5 des Kragarmes 4 abstützt. Dieser Wagen ist, in seiner Bewegung zweckmäßig zwangsläufig mit der der Teleskopglieder gekoppelt, in der Fig. 5 bis zum Ende des unteren Schenkels 5 vorgeschoben und wird damit voll wirksam. Mit teleskopartigem Einziehen des Tragarmes 8, der Ausfahrschiene 11 sowie Rückziehen des Kragarmes 4 mit seinen in Führungsschienen 3 laufenden Rollen 32 wird auch der Wagen 16 zurückgezogen und gegen das Joch 6 hin bewegt, bis er, strichpunktiert dargestellt, in der rückgefahrenen Extremstellung am Joche 6 anliegt. Damit wird das nach vollem teleskopartigem Ausfahren ausgeübte höchste Moment auch bei voll ausgefahrenem Wagen 16 über diesen übernommen, während mit Einfahren des Tragarmes 8 und damit Abnehmen des den Kragarm 4 beanspruchenden Momentes der mit seinen Rollen stützende Wagen 16 auf das Joch 6 zu fährt und damit, an immer kleineren Hebelarmen angreifend, immer weniger wirksam wird.

Es ist auch möglich, in einer Variante nicht den oberen Schenkel 7 direkt auf dem unteren Schenkel 5 abzustützen, sondern die Abstützung über seitliche Profile derselben derart vorzunehmen, daß beim Rückfahren der Wagen 16 über die innere Flanke des Joches 6 hinaus bis neben bzw. hinter dieses Joch fahrbar ist, so daß der dem Bodenbrett 14 einer Palette 9 gebotene Raum durch den Wagen 16 nicht eingeschränkt wird.

Die Antriebe sind anhand der Seitenansicht der Fig. 5 in Verbindung mit der Aufsicht der Fig. 6 erkenntlich. Der Drehantrieb des Drehtisches erfolgt mittels eines an diesem angeordneten Zahnkranzes 19, in den das Ritzel 20 eines Elektromotores 21 eingreift. Die diversen Verschiebungen der Teleskopglieder werden durch einen Elektromotor 15 bewirkt, der im Ausführungsbeispiel über einen Zahnriemen 22 Riemenscheiben 23 betreibt, die auf den Enden von Gewindespindeln 24, 25 angeordnet sind. Hierbei sind die beiden jeweils aus über Distanzglieder 26 miteinander verbundenen starken Blechen 27 gebildeten Kragarme 4 auf ihrer Rückseite durch ein Querblech 28 sowie durch eine Traverse 29 miteinander verbunden. Die Gewindespindel 25 durchgreift eine Bohrung dieser Traverse 29, während die beiden Gewindespindeln 24 in Spindelmuttern der Traverse 29 ein- und diese durchgreifen. Die Wagen 16 ihrerseits sind durch eine Traverse 30 miteinander verbunden, die mit einer Spindelmutter für die Gewindespindel 25 ausgestattet ist. Die Steigungen der Gewindespindeln sind so ausgebildet, daß bei einer bestimmten Umdrehungszahl die Gewindespindeln 24 die Kragarme 4 aus ihrer in den Figuren ausgezogen dargestellten Stellung in die in Fig. 5 strichpunktiert gezeigte zurückziehen. Die Steigung der Gewindespindel 25 ist ca. 1,7fach größer ausgeführt und zieht bei der gleichen Umdrehungszahl die Wagen 16 aus ihrer in Fig. 5 ausgezogenen Stellung in die strichpunktiert angedeutete zurück. Durchentsprechend gespannte Stahlseile, Gliederketten oder dergleichen wird in an sich bekannter Weise erreicht, daß die Ausfahrschiene 10 und der Tragarm 8 teleskopartig mit zurückgezogen werden, so daß in der Ausgangsstellung diese praktisch alle übereinanderstehen. Es ist weiterhin möglich, die Wagen 16 von der Bewegung der Kragarme 4 abgeleitet gegen diese zu verschieben.

Die Erfindung läßt sich weitgehend variieren; wesentlich ist, daß bei der Übernahme von Lasten mit den eingreifenden, eine Gabel bildenden Tragarmen nicht nur nach unten offen ausgeführte Paletten in üblicher Art unterfahren werden können, sondern daß die gebildeten Gabelarme auch zwischen Bodenbrettern und Deck- bzw. Zwischenbrettern von Paletten einschiebbar sind und beim Rückziehen für die Bodenbretter Raum geboten wird. Weiterhin soll durch extreme Ausschieblängen die Möglichkeit geboten werden, in Regalfächern nicht nur, wie bisher allgemein üblich, jeweils eine Palette unterzubringen: Es soll ermöglicht werden, in einem Regalfach hintereinander zwei Paletten einzulagern. Die durch das überweite Aufschieben hierbei entstehenden überlangen Hebelarme bewirken bei Belastung entsprechend übergroße Momente, welche an sich unvorteilhaft breite Joche des Kragarmes erfordern würden. Derart breite Joche lassen sich durch eine gesonderte zusätzliche Abstützung vermeiden, die jedoch mit zunehmendem Einfahren der gebildeten Teleskope zurückzuweichen hat. Im Ausführungsbeispiel werden sie bis zum Joch zurückgeschoben, so daß auch die Breite eines solchen stützenden Wagens störend ins Gewicht fällt. Vermeiden läßt sich dieses, indem die Rollen des stützenden Wagens sich auf Profilteile abstützen, die seitlich des Joches so angeordnet sind, daß die Wagen jeweils bis neben und/oder hinter das Joch rückfahrbar sind und im vor der Innenflanke des Joches anstehenden Raum nicht mehr in Erscheinung treten.

Die Antriebsvorgänge sind im Ausführungsbeispiel über kraftbetriebene Gewindespindeln bewirkt, wobei die ungleichen Vorschübe der Kragarme und des Wagens durch unterschiedliche Steigungen berücksichtigt sind. Es besteht selbstverständlich die Möglichkeit, Gewindespindeln gleicher Steigung zu verwenden, die unterschiedlich übersetzt oder separat angetrieben werden. Weiterhin sind beliebige Möglichkeiten wie Riemen- bzw. Kettentriebe, Zahnräder oder Zahnstangentriebe, Hebel- oder Kulissentriebe, hydraulische oder pneumatisch betriebene Zylinder oder dergleichen gegeben. Auch die einzelnen Teleskopglieder lassen sich auf unterschiedliche Weise betreiben.

## Patentansprüche

1. Teleskopierbare Aufnahmevorrichtung zur Handhabung von Packungen und Verpackungseinheiten, insbesondere von Paletten mit einem Drehtisch, der mit Führungsschienen ausgestattet ist, in denen die unteren Schenkel von U-förmig ausgeführten Kragarmen geführt sind, deren oberen Schenkeln teleskopartig ausschiebbare Tragarme zugeordnet sind,
**dadurch gekennzeichnet,**
daß die Tragarme (8) teleskopartig auf Ausfahrschienen (9) geführt sind, die ihrerseits wieder auf den oberen Schenkeln (7) der Kragarme (4) geführt sind.

2. Anordnung nach Anspruch 1,
**dadurch gekennzeichnet,**
daß die oberen Schenkel (7) der Kragarme (4) vermittels sie unterfangender Stützrollen (17) abstützbar sind, die in Richtung auf die Joche (6) der Kragarme (4) rückziehbar sind.

3. Anordnung nach Anspruch 1 oder 2,
**dadurch gekennzeichnet,**
daß die Stützrollen (17) in vermittels von Laufrollen (18) verfahrbaren Wagen (16) angeordnet sind.

4. Anordnung nach Anspruch 3,
**dadurch gekennzeichnet,**
daß die Laufrollen (18) von Flächen der unteren Schenkel (5) der Kragarme (4) getragen sind.

5. Anordnung nach Anspruch 3,
**dadurch gekennzeichnet,**
daß die Laufrollen von Profilflächen der Führungsschienen (3) oder anderen drehtischfesten Profilen getragen sind.

6. Anordnung nach mindestens einem der Ansprüche 2 bis 5,
**dadurch gekennzeichnet,**
daß die oberen Schenkel (7) der Kragarme (4) mit seitlichen, die Stützrollen (17) überfangenden Stützflächen ausgestattet sind und die Laufrollen (18) auf seitlich der Joche (6) der Kragarme (4) angeordneten Stützflächen laufen, die mit dem Drehtisch (2), den Führungsschienen (3) und/oder den unteren Schenkeln (5) der Kragarme (4) verbunden sein können.

7. Anordnung nach mindestens einem der Ansprüche 1 bis 6,
**dadurch gekennzeichnet,**
daß der Verschiebeantrieb der unteren Schenkel (5) der Kragarme (4) in den Führungsschienen (3) mit dem Verschiebeantrieb der Wagen (16) gekoppelt ist.

8. Anordnung nach mindestens einem der Ansprüche 1 bis 7,
**dadurch gekennzeichnet,**
daß bei ausgefahrenem Kragarm (4) auch der Wagen (16) seine extrem vorgeschobene Stellung aufweist, und daß bei extrem zurückgefahrenen Kragarmen die Wagen (16) die Joche (6) der Kragarme (4) erreichen und/oder seitlich umfahren.

## Claims

1. Telescopic receiving device for the handling of packages and packaging units, particularly of palettes, with a turntable which is equipped with guide rails, in which the lower limbs of cantilever arms constructed in U-shape are guided, the upper limbs of the cantilever arms being associated with support arms able to be telescopically slid out, characterised in that the support arms (8) are guided in telescopic manner on extensible rails (9) which in turn are guided on the upper limbs (7) of the cantilever arms (4).

2. Arrangement according to claim 1, characterised in that the upper limbs (7) of the cantilever arms (4) are supportable by means of support rollers (17) which catch under them and which are withdrawable in direction towards the yokes (6) of the cantilever arms (4).

3. Arrangement according to claim 1 or 2, characterised in that the support rollers (17) are arranged in carriages (16) movable by means of guide rollers (18).

4. Arrangement according to claim 3, characterised in that the guide rollers (18) are supported by surfaces of the lower limbs (5) of the cantilever arms (4).

5. Arrangement according to claim 3, characterised in that the guide rollers are supported by profile surfaces of the guide rails (3) or other profiles fixed to the turntable.

6. Arrangement according to at least one of claims 2 to 5, characterised in that the upper limbs (7) of the cantilever arms (4) are equipped with lateral support surfaces catching under the support rollers (17), and the guide rollers (18) run on support surfaces which are arranged laterally of the yokes (6) of the cantilever arms (4) and which can be connected with the turntable (2), the guide rails (3) and/or the lower limbs (5) of the cantilever arms (4).

7. Arrangement according to at least one of claims 1 to 6, characterised in that the displacing drive of the lower limbs (5) of the cantilever arms (4) is coupled in the guide rails (3) with the displacing drive of the carriage (16).

8. Arrangement according to at least one of claims 1 to 7, characterised in that when a cantilever arm (4) is extended also the carriage (16) has its extreme displaced setting, and that in the case of extreme retracted cantilever arms the carriages (16) reach and/or laterally go around the yokes (6) of the cantilever arms (4).

## Revendications

1. Dispositif de soulèvement télescopique pour la manipulation d'emballages et d'unités d'emballage, en particulier de palettes avec une table tournante, équipée de rails de guidage, dans lesquels est guidée la branche inférieure de bras en porte-à-faux en forme de U, dont les branches supérieures comportent des bras support pouvant être dépliés télescopiquement, caractérisé en ce que les bras support (8) sont guidés télescopiquement sur des rails (9) de départ qui sont à leur tour guidés sur les branches (7) supérieures des bras (4) en porte-à-faux.

2. Disposition selon la revendication 1, caractérisée en ce que la branche supérieure (7) des bras en porte-à-faux (4) peut être appuyée à l'aide des galets support (17) qui les soutiennent et qui peuvent être retirés en direction de la travée (6) des bras support (4).

3. Disposition selon la revendication 1 ou 2, caractérisée en ce que les galets support (17) sont disposés dans des chariots (16) pouvant être déplacés à l'aide de galets de roulement (18).

4. Disposition selon la revendication 3, caractérisée en ce que les galets de roulement (18) sont portés par des surfaces des branches inférieures (5) des bras en porte-à-faux (4).

5. Disposition selon la revendication 3, caractérisée en ce que les galets de roulement sont portés par des surfaces profilées des rails de guidage (3) ou d'autres profils fixes sur la table tournante.

6. Disposition selon une quelconque des revendications 2 à 5, caractérisée en ce que les branches supérieures (7) des bras en porte-à-faux (4) sont équipées de surfaces d'appui latérales soutenant les galets support (17) et en ce que les galets de roulement (18) roulent sur des surfaces d'appui disposées à côté des travées (6) des bras en porte-à-faux (4), lesdites surfaces d'appui pouvant être reliées avec la table tournante (2), les rails de guidage (3) et/ou les branches inférieures (5) des bras en porte-à-faux (4).

7. Disposition selon une quelconque des revendications 1 à 6, caractérisée en ce que le dispositifd'entraînement pour le déplacement des branches inférieures (5) des bras en porte-à-faux (4) est accouplé, dans les rails de guidage (3), avec le dispositif d'entraînement pour le chariot (16).

8. Disposition selon une quelconque des revendications 1 à 7, caractérisée en ce que, lorsque les bras en porte-à-faux sont dépliés, le chariot (16) est également dans sa position la plus avancée et en ce que, lorsque les bras en porte-à-faux sont complètement reculés, le chariot (16) atteint et/ou contourne latéralement la travée (6) des bras en porte-à-faux (4).
